# EUROPEAN PATENT APPLICATION

(11) **EP 1 897 478 A2**
(43) Date of publication of application: **12.03.2008**
(21) Application number: 07005588.4
(22) Date of filing: 19.03.2007
(51) Int. Cl.: A47L 9/20

(54) **Electric vacuum cleaner**

(30) Priority: 08.09.2006 JP 2006244277
(71) Applicant: Toshiba TEC Kabushiki Kaisha, Tokyo 141-8664 (JP)
(72) Inventor: Tanaka, Masatoshi, Tokyo 141-8664 (JP); Takemoto, Ritsuo, Tokyo 141-8664 (JP); Tsuchiya, Yoshihiro, Tokyo 141-8664 (JP); Suzuki, Hitoshi, Tokyo 141-8664 (JP)
(74) Representative: Kramer - Barske - Schmidtchen

(57) **Abstract**

The invention relates to an electric vacuum cleaner having means to remove dust that is trapped in a filter that traps fine dust. Switch means switches air passages to provide communication between an auxiliary air passage and the suction side of an electric blower with fine dust removed from a pleated filter by a rotating body being received by a dust receiving section. Air is sucked from an outside-air intake opening into the electric blower through the dust receiving section and a fine dust filter in a dust collecting section unit, which allows the fine dust collected in the dust receiving section to be trapped in the fine dust filter, resulting in improved cleanliness.

## Description

### FIELD OF THE INVENTION

The present invention relates to an electric vacuum cleaner including dust removing means adapted to come into contact with a filter to remove dust that is trapped in the filter.

### BACKGROUND OF THE INVENTION

Conventionally, such kinds of electric vacuum cleaners are equipped with a vacuum cleaner main body with an electric blower housed therein as shown in Japanese Laid-Open Patent Publication No. 2004-358135, for example. In the vacuum cleaner main body, there are provided a dust collecting section for trapping dust that is sucked therein through the action of a negative pressure generated by driving the electric blower and a circular pleated filter positioned on the downstream side of the dust collecting section to trap fine dust that cannot be trapped in the dust collecting section. Then, as for the pleated filter, dust removing means is driven after cleaning, etc., to come into contact with and flip the filter so that fine dust trapped in the filter is removed and collected in a dust receiving section.

However, the above-described electric vacuum cleaner suffers from a problem in that the fine dust removed from the pleated filter is collected below the pleated filter, resulting in insufficient cleanliness.

The present invention has been made in consideration of the above-described problem, and an object thereof is to provide an electric vacuum cleaner with improved cleanliness.

### Summary of the Invention

An electric vacuum cleaner according to the present invention includes: a dust collecting section for trapping dust that is sucked therein by driving the electric blower; a filter for trapping fine dust; drive means for rotating the filter under a predetermined condition; dust removing means adapted to come into contact with the filter being rotated by the drive means to remove dust that is trapped in the filter; a dust receiving section for receiving dust removed from the filter by the dust removing means; an outside-air intake opening capable of providing communication between the dust receiving section and outside air; a main air passage for providing communication between the main body suction port and the suction side of the electric blower through at least the filter; an auxiliary air passage for providing communication between the outside-air intake opening and the suction side of the electric blower through the dust receiving section and the dust collecting section and not through the filter; and switch means adapted to be driven by the drive means to provide communication selectively between the main air passage or the auxiliary air passage and the suction side of the electric blower in accordance with the rotational direction of the drive means.

In accordance with the present invention, the switch means provides communication between the auxiliary air passage and the suction side of the electric blower with fine dust removed from the filter by the dust removing means being received by the dust receiving section, so that air is sucked from the outside-air intake opening into the electric blower through the dust receiving section and dust collecting section, which allows the fine dust collected in the dust receiving section to be trapped in the dust collecting section, resulting in improved cleanliness.

### BRIEF DESCRIPTION OF THE DRAWINGS

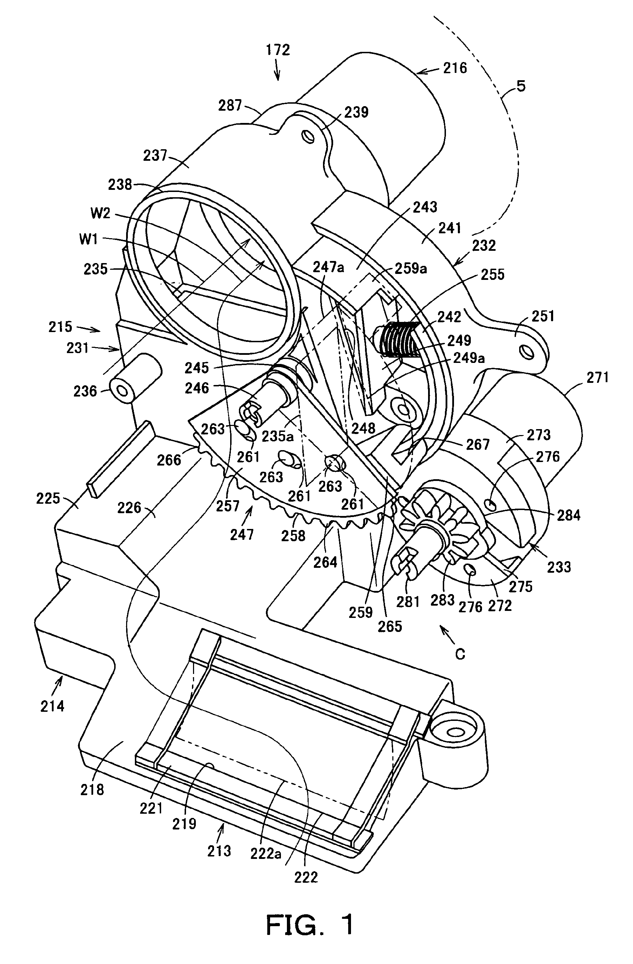

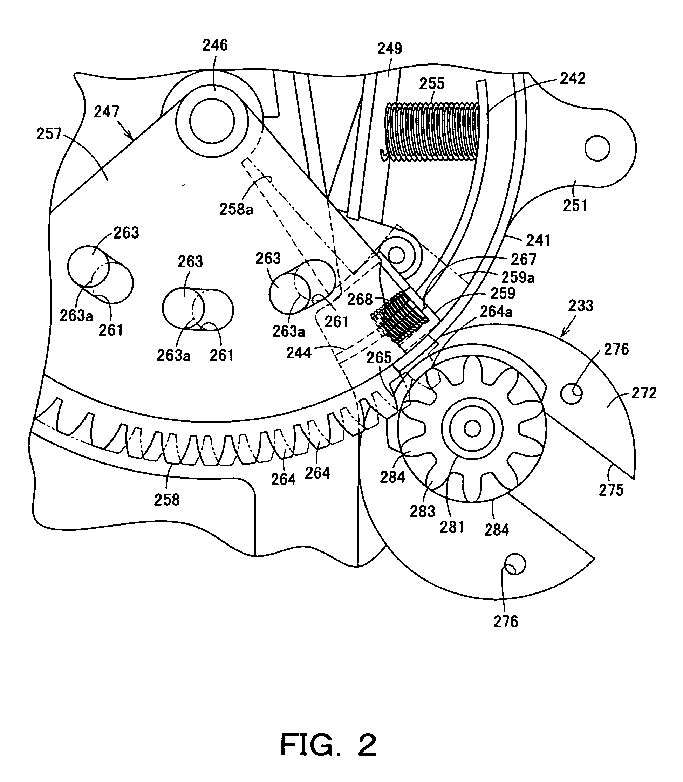

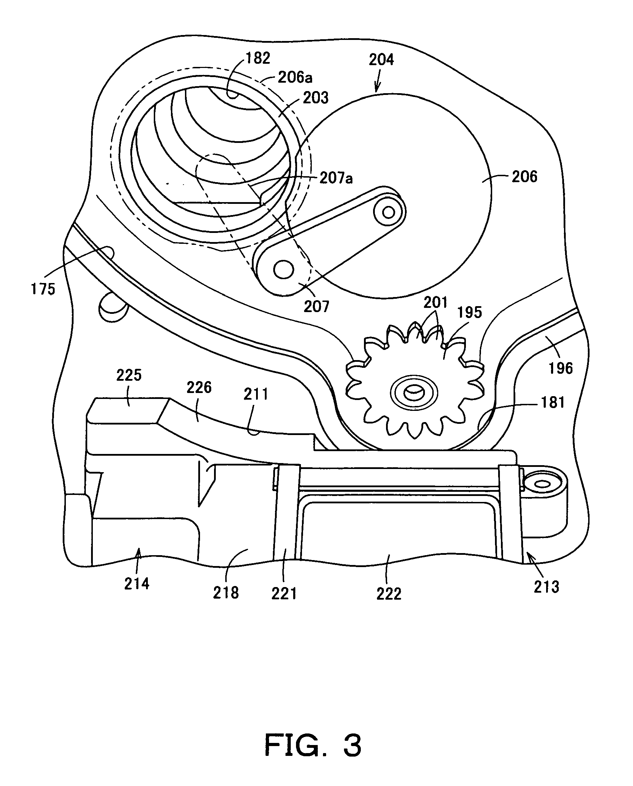

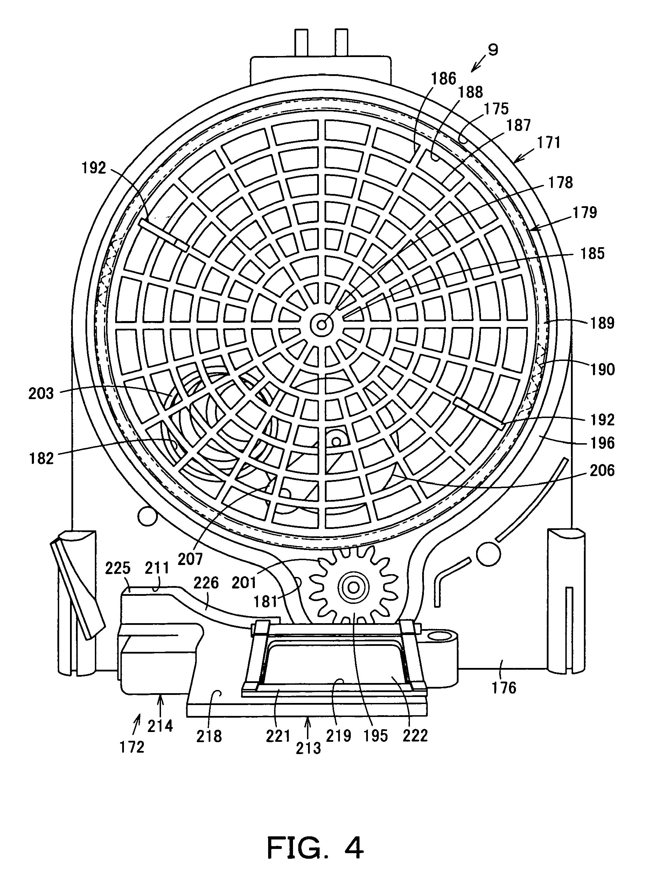

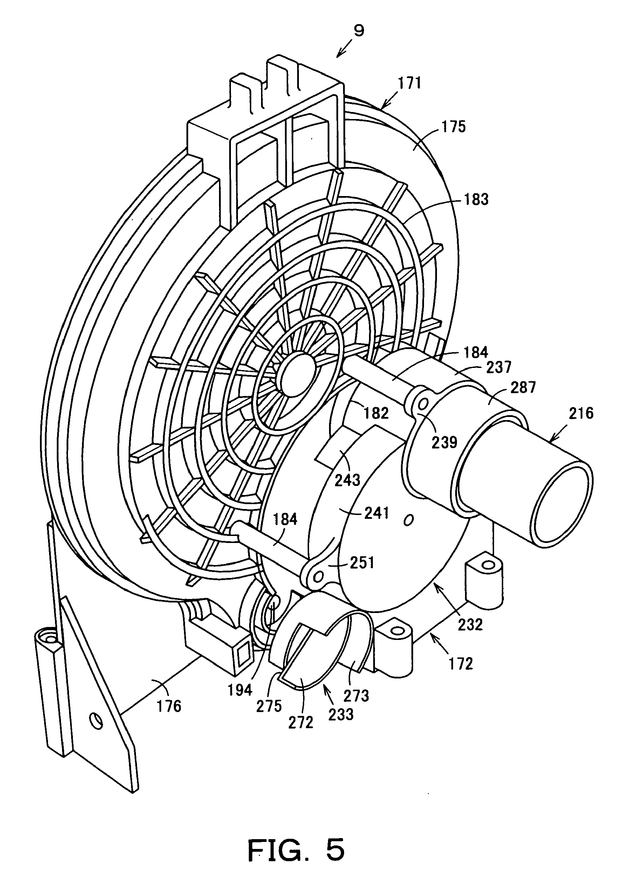

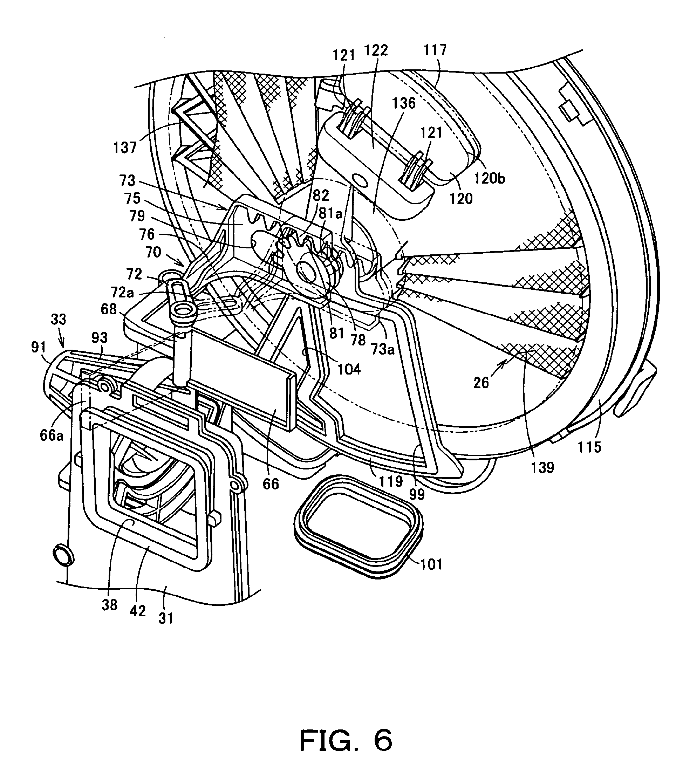

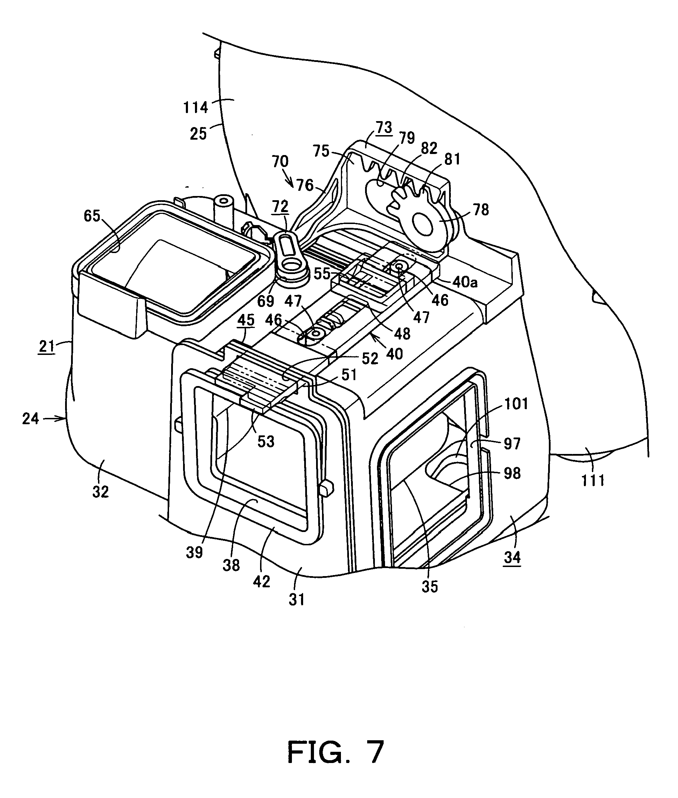

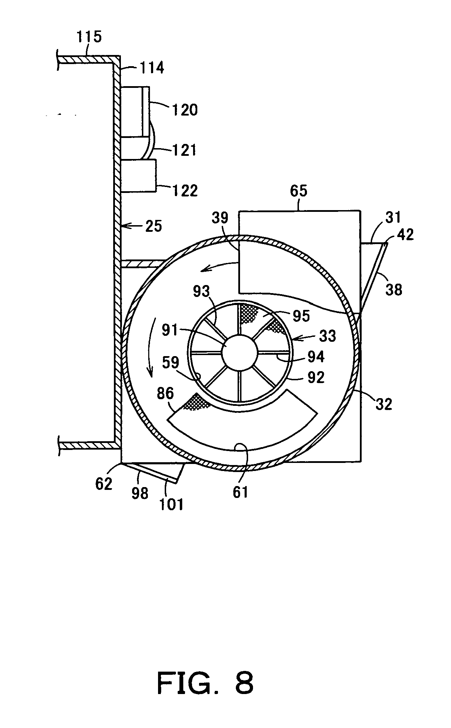

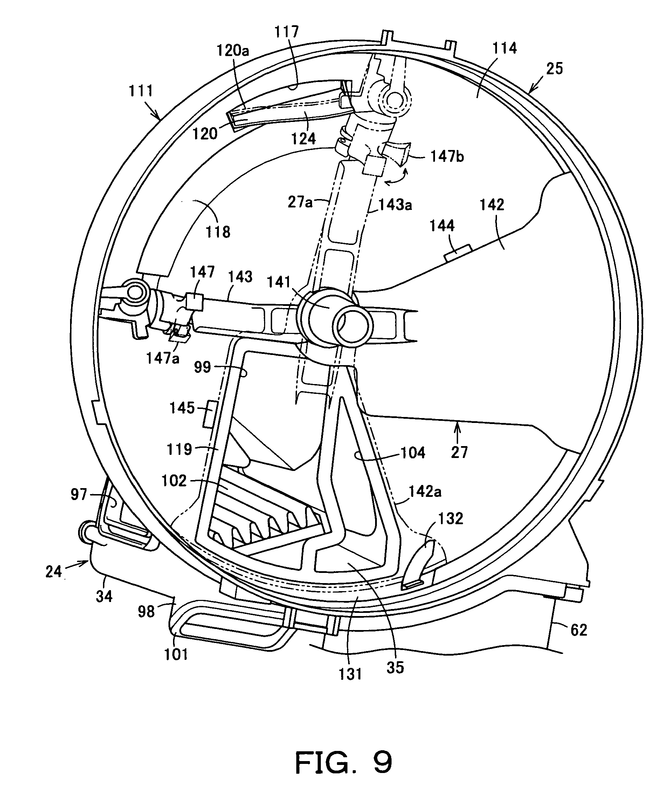

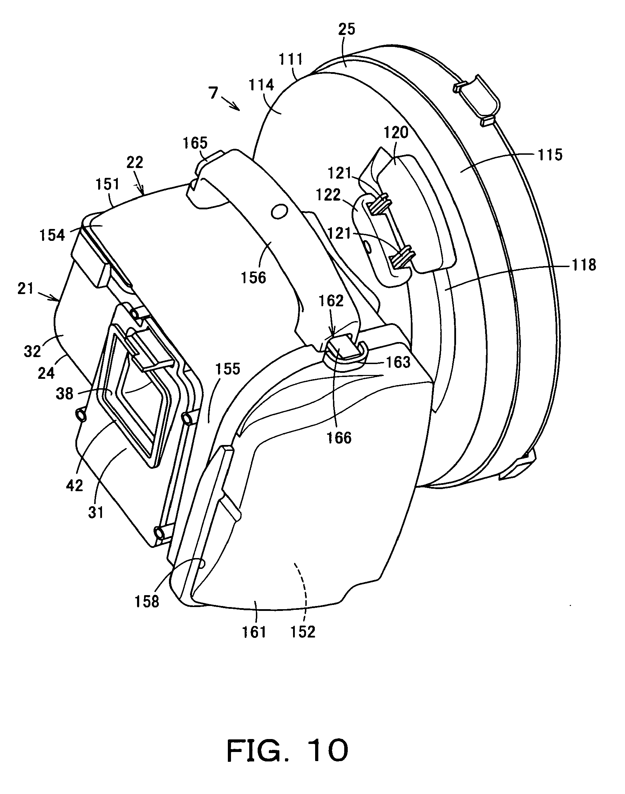

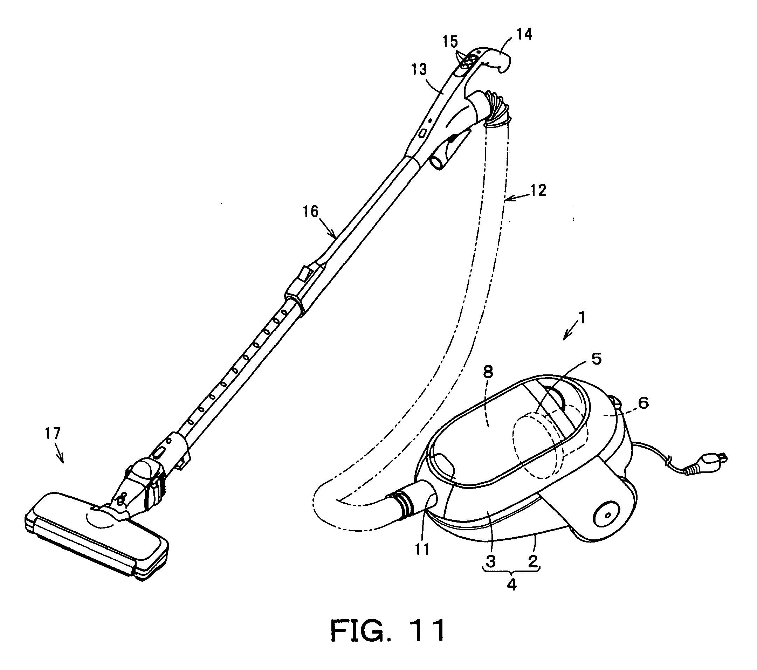

Fig. 1 is a perspective view showing a substantial part of an electric vacuum cleaner according to an embodiment of the present invention; Fig. 2 is an enlarged front elevational view showing a part of switch means in the electric vacuum cleaner; Fig. 3 is an enlarged perspective view showing a part of a partition wall in the electric vacuum cleaner; Fig. 4 is a front elevational view of the partition wall; Fig. 5 is a perspective view of the partition wall when viewed from the backside thereof; Fig. 6 is a partially notched perspective view showing the interior of a dust collecting section in the electric vacuum cleaner; Fig. 7 is a perspective view showing a part of the dust collecting section; Fig. 8 is a side elevational view showing a part of the dust collecting section; Fig. 9 is a perspective view of the dust collecting section when viewed from the backside thereof; Fig. 10 is a perspective view of the dust collecting section; and Fig. 11 is a perspective view of the electric vacuum cleaner.

### DETAILED DESCRIPTION OF THE PREFERRED EMBODIMENT

The configuration of an electric vacuum cleaner according to an embodiment of the present invention will hereinafter be described with reference to Figs. 1 to 11.

In Fig. 11, numeral 1 denotes a vacuum cleaner main body. The vacuum cleaner main body 1 is a so-called canister-type electric vacuum cleaner travelable on the floor. The vacuum cleaner main body 1 includes a main body case 4 having a lower case 2 with the upper side thereof being slanted downward from the rear toward the front and opened upward and a cover body 3 covering the lower case 2 from above. There are provided an electric blower chamber 6 with an electric blower 5 housed therein and a main body dust collecting chamber 8 openable upward through the cover body 3 to attach/detach a dust collecting unit 7, respectively, in the rear and front parts of the main body case 4, the chambers being partitioned by a partition wall 9.

Then, a main body suction port 11 communicable with the suction side of the electric blower 5 via the main body dust collecting chamber 8 is formed in an opening manner in the front end portion of the main body case 4. A hose body 12 is provided detachably at the main body suction port 11 and a handled operation part 13 is provided at the leading end portion of the hose body 12. A grip part 14 to be gripped by an operator is provided in a protruding manner from the handled operation part 13 and a plurality of setup buttons 15 through which operations of the electric blower 5, etc., are to be set by the operator are provided on the grip part 14. Then, an extension duct 16 and a floor brush 17 as a suction port body are connected in series in a communicating manner to the leading end portion of the handled operation part 13.

Further, in the main body case 4, there is disposed a cord reel with a power cord (not shown in the drawings) for supplying power to the electric blower 5 wound therearound, whereby the power cord can be taken out and put in the main body case 4.

The electric blower 5 is disposed in the electric blower chamber 6 with the suction side thereof being positioned forward with the exhaust side rearward. Also, the electric blower 5 can operate in a predetermined operation mode based on a signal from control means (not shown in the drawings) that is provided in the main body case 4. The operation mode can be set appropriately by operating the setup buttons 15.

The dust collecting unit 7 includes a dust separating unit 21 as a dust separating main body section and a dust collecting section unit 22 as a dust collecting section.

As shown in Figs. 6 to 10, the dust separating unit 21 has a dust separating section 24 as a first separating section and a filter section 25 provided integrally in the rear of the dust separating section 24. In the filter section 25, a pleated filter body 26 for trapping fine dust and a rotating body 27 as dust removing means provided coaxially with the pleated filter body 26 are supported coaxially and rotatably.

A rectangular-cylindrical guiding air duct 31 is disposed in approximately the lateral center of the dust separating section 24, and an approximately cylindrical separating chamber section 32 communicates with one side of the guiding air duct 31 on the left side in Fig. 7. In the separating chamber section 32, approximately truncated cone-shaped, i.e., approximately circular truncated conical dust separating means 33 is provided coaxially with the separating chamber section 32, and a communication duct 34 communicating with the downstream side of the dust collecting section unit 22 is provided on the right side in Fig. 7, the other side of the guiding air duct 31. Further, a communication air passage 35 for providing communication between the downstream side of the separating chamber section 32 and the upstream side of the filter section 25 is provided below the guiding air duct 31.

There are provided a suction connecting port 38 connected air-tightly to the downstream side of the main body suction port 11 with the dust separating unit 21 being placed in the main body dust collecting chamber 8 of the main body case 4 to suck dust with air and a connection opening 39 communicating with the upstream side of the separating chamber section 32, respectively, in the front and rear end portions of the guiding air duct 31. Also, a locking body 40 for locking the dust collecting section unit 22 against the dust separating unit 21 is provided in the upper part of the guiding air duct 31.

A front packing 42 as a front sealing member for airtight connection with the main body suction port 11 is attached to the peripheral edge portion of the suction connecting port 38.

The connection opening 39 is adapted to guide air that has passed through the guiding air duct 31 between the inner peripheral surface of the separating chamber section 32 and the outer periphery of the dust separating means 33 in such a manner that the air is rotated in the circumferential direction.

The locking body 40 is formed in an anteroposteriorly long-plate shape and the front end portion thereof is inserted in an insertion locking portion 45 that is provided above the suction connecting port 38 of the guiding air duct 31. Sliding holes 46 and 46 are bored, respectively, in a position on the front side and in the vicinity of the rear end portion of the locking body 40, boss-shaped guiding boss portions 47 and 47 that are provided in a protruding manner from the upper surface of the guiding air duct 31 being inserted in the respective sliding holes 46 and 46, and a locking portion 48 for locking the dust collecting section unit 22 side is provided between the sliding holes 46 and 46. Then, the locking body 40 is urged forward by locking body urging means not shown in the drawings.

The insertion locking portion 45 is formed by boring a horizontally long insertion hole 52 in which the front end side of the locking body 40 is to be inserted in a plate-shaped protruding plate portion 51 that protrudes upward from the guiding air duct 31. Then, a sliding protrusion 53 that serves as a to-be-operated portion when sliding the locking body 40 back and forth is provided in a protruding manner from the front end portion of the locking body 40 that is inserted in the insertion hole 52 of the insertion locking portion 45.

Each sliding hole 46 is formed in an anteroposteriorly long-hole shape and is adapted to guide each guiding boss portion 47 relatively back and forth as well as to prevent the locking body 40 from being displaced in the lateral direction.

Then, the locking portion 48, which exists in the central part where a quadrangular locking hole 55 is bored, is adapted to lock the dust collecting section unit 22 against the dust separating unit 21 when a locking nail (not shown in the drawings) that is provided in a protruding manner downward from the dust collecting section unit 22 is inserted in the locking hole 55 so that the locking nail is engaged with the rear part of the locking hole 55 through urging by the locking body urging means, while being arranged in such a manner that the dust collecting section unit 22 can be detached from the dust separating unit 21 when the sliding protrusion 53 is pressed and thereby the locking body 40 slides rearward against the urging by the locking body urging means so that the locking nail is disengaged from the locking hole 55.

In addition, the connection opening 39 that communicates with the guiding air duct 31 is provided in the upper part on the front end side of the separating chamber section 32, and an opening 59 is bored in a circular shape so that the dust separating means 33 is attached thereto in the central part of the separating chamber section 32. A fan-shaped opening 61 is further bored around the opening 59. Also, in the peripheral wall portion below the separating chamber section 32, a dust return opening not shown in the drawings is bored as a communication opening portion communicating with the filter section 25 via a communication air passage 62. Further, the separating chamber section 32 can be opened and closed by a cover not shown in the drawings. Then, in the peripheral wall portion above the separating chamber section 32, an introduction opening 65 for providing communication between the separating chamber section 32 and the upstream side of the dust collecting section unit 22 is formed in an opening manner.

Between the connection opening 39 and the suction connecting port 38, there is openably provided a first opening-closing valve 66 that is an upstream side opening-closing member as a first air passage opening-closing member positioned in the guiding air duct 31.

The first opening-closing valve 66 is adapted to communicate/block off communication between the connection opening 39 and the suction connecting port 38, and in the left end portion in Fig. 6 that is one end portion in the longitudinal direction formed in a laterally long shape, there is provided a first opening-closingvalve axial support portion 68 supported axially across the guiding air duct 31 vertically. The upper end portion of the first opening-closing valve axial support portion 68 is inserted in an opening-closing valve axial support hole 69 bored next to the introduction opening 65 in the upper part of the guiding air duct 31 and is connected to the rotating body 27 via a connection mechanism 70.

Here, the connection mechanism 70 has a crank body 72 as a connection body, one end portion thereof being connected rotatably to the upper end portion of the first opening-closing valve axial support portion 68, and a connection plate 73 as a sliding connection body for connecting the crank body 72 and the rotating body 27. Then, the connection mechanism 70 is at least partially covered, together with the locking body 40, with a cover body (not shown in the drawings) that is provided from the front part of the filter section 25 to the upper part of the guiding air duct 31.

The leading end side of the crank body 72 is connected with the first opening-closing valve 66 in such a manner as to keep a constant angle therebetween when viewed from above.

The connection plate 73 includes a plate-shaped connection plate main body 75 and an extensively provided arm portion 76 provided extensively and approximately horizontally forward from the left end portion of the connection plate main body 75 in Fig. 6.

The connection plate main body 75 is formed in a horizontally long shape and is housed in a mechanism housing section (not shown in the drawings) formed in front of the filter section 25. Also, in the connection plate main body 75, a rotation axis hole 79 into which the rotation axis 78 of the rotating body 27 is inserted is formed in a laterally long-hole shape, and above the rotation axis hole 79, a gear-shaped rack gear portion 82 to be meshed with a meshing gear portion 81 that is provided partially in the peripheral edge portion of the rotation axis 78 is provided along the lateral direction. Therefore, the connection plate main body 75 has the role of converting the rotation of the rotating body 27 into lateral sliding.

The base end side of the crank body 72 is supported axially and rotatably at the leading end portion of the extensively provided arm portion 76. Therefore, the crank body 72 can convert the lateral sliding of the connection plate main body 75 into rotation of the first opening-closing valve axial support portion 68 of the first opening-closing valve 66.

Also, the opening 59 communicates with the filter section 25 via the communication air passage 35.

The opening 61 is formed with a grid-like rib not shown in the drawings, and a net filter 86 is installed over the rib. Then, the opening 61 communicates with the upstream side of the filter section 25 via the communication air passage 35, as is the case with the opening 59.

The communication air passage 62 is formed approximately horizontally from the lower side in the rear part of the separating chamber section 32 to the lower part of the filter section 25.

Also, the dust separating means 33 includes a disk 91 positioned at the leading end portion thereof and an annular ring frame 92 attached to the periphery of the opening 59, the disk 91 and ring frame 92 being connected by a plurality of radially provided rib-shaped connection frames 93, and a communication opening 94 communicating with the opening 59 that is formed between the connection frames 93 is provided with a net filter 95.

The communication duct 34 is an air passage continuing from a side opening 97 bored in the right side portion of the dust separating section 24 in Fig. 7 to a rectangular-cylindrical protruding duct 98 provided in a protruding manner from the lower part in approximately the lateral center area of the dust separating section 24 and communicating with the front part of the filter section 25 via a first connection opening 99.

A sealing member not shown in the drawings is provided in the peripheral edge portion of the side opening 97 for airtight connection with the downstream side of the dust collecting section unit 22.

The protruding duct 98 is positioned on the rear side of the dust separating section 24, and a connection packing 101 as a connection sealing member is attached to the outer peripheral edge portion of the lower end portion on the leading end side of the protruding duct 98. Also, the base end portion of the protruding duct 98 is covered with a fine dust filter 102 as pleated fine dust trapping means in the communication duct 34.

Here, as for the fine dust filter 102, a plurality of pleats running back and forth are formed in the lateral direction.

In addition, the communication air passage 35 is an air passage formed anteroposteriorly parallel to the communication duct 34, the rear end portion thereof communicating with the front part of the filter section 25 via a second connection opening 104 that is bored next to the side portion of the first connection opening 99.

Then, the filter section 25 includes a housing case 111 as an approximately cylindrical filter section main body with the rear end portion thereof being opened, pleated filter body 26 as a filter provided rotatably in the housing case 111, and rotating body 27 adapted to rotate together with the pleated filter body 26.

The housing case 111 has a front wall portion 114 as a partition wall forming the front end thereof and having an approximately circular shape when viewed from the front and a dust receiving section 115 protruding rearward from the outer peripheral edge portion of the front wall portion.

The dust separating section 24 is formed integrally in front of the front wall portion 114. Also, in the central part of the front wall portion 114, there is bored an axial support hole (not shown in the drawings) for axially and rotatably supporting the rotating body 27. Further, the connection openings 99 and 104 are bored in the lower part in approximately the lateral center of the front wall portion 114, while in a position on the upper side, there is bored an outside-air intake opening 117 as an upper opening portion in a fan shape in the circumferential direction. Also, in the front wall portion 114, a guiding part 118 for guiding the rotating body 27 is provided in the circumferential direction.

Here, the first connection opening 99 is formed in a vertically long shape.

Also, the second connection opening 104 is formed on the right side of the first connection opening 99 in Fig. 9 with a width smaller than that of the first connection opening 99.

Then, the connection openings 99 and 104 are wholly formed in an approximately trapezoidal shape in which the outer peripheral side rather than the center side of the front wall portion 114 is expanded laterally. A packing 119 as a filter upstream side sealing member is also attached to the peripheral edge portions of the connection openings 99 and 104.

The outside-air intake opening 117 can provide communication between outside air and the dust receiving section 115 and is formed above and along the guiding part 118. Also, on the outside-air intake opening 117, there is disposed an opening-closing cover 120 that can open and close the outside-air intake opening 117.

Here, the opening-closing cover 120 is positioned in front of the front wall portion 114 and hinge portions 121 and 121 are provided in a protruding manner from the lower end portion of the cover, the hinge portions 121 and 121 being supported axially and rotatably by a hinge receiving portion 122 that is provided in front of the guiding part 118 as well as being urged rearward, that is, against the front wall portion 114 by opening-closing body urging means not shown in the drawings. Then, the opening-closing cover 120 can open and close the outside-air intake opening 117 by moving forward against an urging force by the opening-closing body urging means. Also, an opening-closing body protrusion 124 contactable with the rotating body 27 is provided in a protruding manner from the rear part of the opening-closing cover 120. The opening-closing body protrusion 124 is formed in such a manner that the amount of protrusion increases from the left end portion to the right end portion in Fig. 9 and protrudes from the outside-air intake opening 117 into the housing case 111, that is, astern of the rear surface of the front wall portion 114.

The guiding part 118 is formed in an arc shape of about 90 degrees from the left side to the upper side in the figure of the front wall portion 114.

Also, the dust receiving section 115 is a wall-shaped portion protruding rearward all around the front wall portion 114 to receive fine dust removed from the pleated filter body 26 by the rotating body 27. In the dust receiving section 115, there is opened a lower outlet opening 131, i.e., a lower powder slot as an outlet opening below the central part of the front wall portion 114 and in a position approximately symmetrical to the outside-air intake opening 117 with respect to the central part of the front wall portion 114.

The lower outlet opening 131 is formed in an elongated quadrangular shape and communicates with the separating chamber section 32 via the communication air passage 62. On the lower outlet opening 131, there is also disposed an opening-closing member 132 to be opened and closed by the rotation of the rotating body 27. The opening-closing member 132 is provided to be capable of opening and closing the lower outlet opening 131 in accordance with the rotational direction of the rotating body 27.

In addition, the pleated filter body 26 has an approximately cylindrical shank 136 positioned in the central part thereof in which the rear end portion of the rotation axis 78 of the rotating body 27 is inserted, a plurality of pleat bones 137 provided in a radially protruding manner from the outer peripheral surface of the shank 136, and a pleated filter 139 as a filter applied to the pleat bones 137 and formed in a radially pleated shape. It is noted that in Fig. 6, only a substantial part of the pleated filter body 26 is shown and the pleated filter 139 is partially notched to show the pleat bones 137.

Also, the rotating body 27 has a shank 141 as a rotating body shank inserted in the shank 136 of the pleated filter body 26, a choke valve portion 142 provided in a radially protruding manner from the shank 141, and a dust removing arm portion 143 provided in a protruding manner from the shank 141 in the direction opposite that of the choke valve portion 142.

As mentioned above, the meshing gear portion 81 is provided in the front end portion of the shank 141, which protrudes more anteriorly than the front wall portion 114.

The choke valve portion 142 is formed to have an area larger than that of the entire connection openings 99 and 104 and to have a shape capable of covering the connection openings 99 and 104. Then, the choke valve portion 142 is adapted to open the entire connection openings 99 and 104 when the rotating body 27 is in a state indicated by the solid line in Fig. 9, while to close the entire connection openings 99 and 104 when the rotating body 27 is in a state indicated by the imaginary line 142a in Fig. 9. It is noted that in these states, the choke valve portion 142 comes into contact with stopper portions 144 and 145 provided on the front wall portion 114 so that the rotation of the rotating body 27 is limited. Also, the choke valve portion 142 is adapted to come into contact with the opening-closing member 132 when rotating to open and close the opening-closing member 132.

The dust removing arm portion 143 is formed to have a distance from the shank 141 larger than that from the outside-air intake opening 117 and is adapted to come into contact with the opening-closing body protrusion 124 of the opening-closing cover 120 when rotating to open and close the opening-closing cover 120. Also, on the dust removing arm portion 143, there is provided a dust removing protrusion 147 as a dust removing section protruding rearward, that is, toward the pleated filter body 26. The dust removing protrusion 147 is adapted to remove fine dust trapped in the pleated filter 139 by applying a vibration to the pleated filter 139, the amount of protrusion being set fittable into a valley portion of the pleated filter 139 with the pleated filter body 26 being placed in the filter section 25. The dust removing protrusion 147 is also urged by urging means not shown in the drawings in a direction where the state of protruding rearward approximately perpendicular to the dust removing arm portion 143 is kept.

Meanwhile, as shown in Fig. 10, the dust collecting section unit 22 has: a communication passage 151 communicating with the downstream side of the separating chamber section 32 in the dust separating unit 21 with the dust collecting section unit 22 being placed in the dust separating unit 21; and a dust collecting chamber 152 communicating with the downstream side of the communication passage 151 to collect dust.

The communication passage 151 is formed in an approximately L shape when viewed from the front, having a laterally long-shaped lateral air passage 154 and a sidewall portion 155 provided extensively downward from the right end portion of the lateral air passage 154 in Fig. 10.

An air passage opening (not shown in the drawings) communicating with the introduction opening 65 is bored on the lower side in the left end portion of the lateral air passage 154 in Fig. 10, laying out an air passage that provides communication between the separating chamber section 32 and the dust collecting chamber 152. Also, in the upper part of the lateral air passage 154, there is provided a handle part 156 whereby the dust collecting section unit 22 can be lifted. Further, in the lower part of the lateral air passage 154, a nail portion not shown in the drawings is provided in a protruding manner which can be engaged with the locking hole 55 in the locking portion 48 of the locking body 40 on the dust separating unit 21.

The sidewall portion 155 is adapted to lay out one side of the dust collecting chamber 152, in which a sidewall opening not shown in the drawings is bored which communicates with the side opening 97 when the dust collecting section unit 22 is placed in the dust separating unit 21. The sidewall opening is provided with a filter not shown in the drawings. Also, an opening portion 158 that serves as a dust exhaust port of the dust collecting chamber 152 is formed on the right side of the sidewall portion 155 in Fig. 10.

In addition, the dust collecting chamber 152 is adapted to house relatively large dust such as dust balls and is provided to be openable by a cover body 161 that is supported axially and rotatably by the sidewall portion 155 in the lower end portion of the opening portion 158. In the upper end portion of the cover body 161, there is provided a to-be-locked portion 163 to be locked by a locking mechanism 162 that is partially provided in the handle part 156.

Here, as for the locking mechanism 162, a release button 165 to be operated by an operator with the handle part 156 being held is provided in a protruding manner in the left end portion of the handle part 156 in Fig. 10, while a hook portion 166 adapted to operate by operating the release button 165 is provided in a protruding manner in the right end portion in Fig. 10, and locking nail portion urging means (not shown in the drawings) for urging the hook portion 166 in the locking direction is provided in the handle part 156.

Then, as shown in Figs. 1 to 6, the partition wall 9 has a partition wall central portion 171 fitted and fixed to approximately the lateral center thereof and a partition wall air passage 172 provided anteroposteriorly to intersect with the partition wall central portion 171.

In the lateral center of the partition wall central portion 171, there is provided a circular portion 175 having an approximately circular shape when viewed from the front, and in the lower end portion of the circular portion 175, a choke surface portion 176 continuing to the circular portion 175 is provided in a protruding manner.

The circular portion 175 is formed in a recessed shape from the front toward the rear, and in the central part thereof, there is provided an approximately columnar support axis 178 in a protruding manner forward. A circular plate-shaped rotating portion 179 is supported axially and rotatably by the support axis 178. Also, in the lower part in approximately the lateral center of the circular portion 175, there is continuously formed a protruding recessed portion 181 protruding downward across the choke surface portion 176. Further, on the lower left side of the support axis 178 of the circular portion 175 in Fig. 4, there is bored a circular communication hole 182 communicating with the suction side of the electric blower 5. Then, on the rear surface, i.e., the backside of the circular portion 175, that is, on the electric blower chamber 6 side, there are radially and concentrically formed reinforcing ribs 183, and a plurality of columnar bosses 184 for connecting the partition wall air passage 172 and the partition wall central portion 171 are provided in a protruding manner.

In the central part of the circular rotating portion 179, an approximately cylindrical axial support portion 185 in which the support axis 178 is to be inserted is provided in a protruding manner rearward, and a plurality of radial ribs 186 are provided radially toward the periphery of the front end portion of the axial support portion 185. A plurality of concentric ribs 187 are provided concentrically with the axial support portion 185 so as to connect the radial ribs 186. Therefore, the spaces between the radial ribs 186 and the concentric ribs 187 serve as communication hole portions 188 that provide communication between the front and the rear of the circular rotating portion 179. Also, a rotating frame portion 189 is provided on the outer peripheral edge portion of the circular rotating portion 179, and an outer peripheral gear portion 190 as a meshing portion is provided all over the outer peripheral portion in the rear of the rotating frame portion 189.

Further, protruding ribs 192 are provided in a protruding manner forward from parts of the radial ribs 186 to have a wall shape along the radial ribs 186. The protruding ribs 192 are adapted to be fitted into valley portions of the pleated filter body 26 to rotate the circular rotating portion 179 and the pleated filter body 26 integrally.

A hole portion 194 is bored in approximately the center of the protruding recessed portion 181, and a rotating gear 195 for rotating the circular rotating portion 179 is provided rotatably in the hole portion 194. Further, a partition wall packing 196 as a partition wall sealing member continuing to the peripheral edge portion of the circular portion 175 is attached to the peripheral edge portion of the protruding recessed portion 181.

A gear portion 201 as a rotational meshing portion is provided all over the outer periphery of the rotating gear 195, the gear portion 201 being adapted to be meshed with the outer peripheral gear portion 190 of the circular rotating portion 179 so that the circular rotating portion 179 is rotated with the rotation of the rotating gear 195.

A packing 203 as a sealing member is provided on the peripheral edge portion of the communication hole 182. In the vicinity of the communication hole 182, there is also provided an opening-closing valve 204 for opening and closing the communication hole 182.

Here, the opening-closing valve 204 includes: a valve body 206 having a circular shape when viewed from the front and having a size slightly larger than that of the communication hole 182; and an axial support arm portion 207 for axially and rotatably supporting the valve body 206 at the leading end portion thereof.

The leading end portion of the axial support arm portion 207 is urged in the circumferential direction by urging means not shown in the drawings with respect to the valve body 206, while the base end portion of the axial support arm portion 207 is supported axially and rotatably by an axial support hole portion not shown in the drawings that is bored in the circular portion 175.

Also, in the choke surface portion 176, a fitting hole portion 211 to be fitted with the partition wall air passage 172 is bored in the lower left part in Fig. 4.

Meanwhile, as shown in Figs. 1 and 2, the partition wall air passage 172 integrally has: a communication protruding portion 213 protruding toward the main body dust collecting chamber 8; a rectangular-cylindrical fitting air passage 214 to be fitted into the fitting hole portion 211 continuously rearward from the left side portion of the communication protruding portion 213; a rectangular-cylindrical vertical air passage 215 rising upward in the electric blower chamber 6 from the rear part of the fitting air passage 214; and a cylindrical communication cylinder 216 protruding rearward from the upper end portion of the vertical air passage 215 to be connected in a communicating manner to the suction side of the electric blower 5.

The communication protruding portion 213 is opened downward and is adapted to come into close contact with the lower surface of the main body dust collecting chamber 8 with no clearance to lay out an air passage with the lower surface of the main body dust collecting chamber 8, the portion being formed in a laterally long shape and having a facing surface portion 218 on the upper side thereof that faces the lower side in the rear part of the dust collecting unit 7 with the dust collecting unit 7 being placed in the main body dust collecting chamber 8. In the facing surface portion 218, there is bored a quadrangular connection hole 219 that communicates with the fitting air passage 214.

The connection hole 219 is adapted to be connected in a communicating manner to the protruding duct 98 with the dust collecting unit 7 being placed in the main body dust collecting chamber 8, and a connection hole packing 221 as a sealing member is provided in the outer edge portion on the upper side of the connection hole 219. Also, a connection hole opening-closing valve 222 for opening and closing the connection hole 219 is installed below the connection hole 219.

The fitting air passage 214 is opened downward and is adapted to come into close contact with the lower surface of the main body dust collecting chamber 8 with no clearance to form an air passage for providing communication between the communication protruding portion 213 and the vertical air passage 215 with the lower surface of the main body dust collecting chamber 8. In the upper surface of the fitting air passage 214, there are formed a horizontal surface 225 and an arc surface 226 continuing to the right side of the horizontal surface 225 in Fig. 1 and having a convex arc shape downward.

The vertical air passage 215 has: an air passage component 231 continuing to above the fitting air passage 214; a mechanical portion 232 provided integrally on the side of the air passage component 231; and an attachment 233 positioned lateral to the air passage component 231 and below the mechanical portion 232.

The air passage component 231 is formed in a rectangular-cylindrical shape with the axial direction thereof extending vertically, and a second opening-closing valve 235, i.e., a downstream side opening-closing member as a second opening-closing member is disposed inside the component. Also, a columnar boss 236 for connecting the partition wall central portion 171 and the partition wall air passage 172 is provided in a protruding manner from the front part of the air passage component 231. Further, in the upper end portion of the air passage component 231, there is anteroposteriorly and horizontally provided an approximately cylindrical connection cylinder 237 to be connected in a communicating manner to the rear part of the communication hole 182 in the partition wall central portion 171. The connection cylinder 237 communicates with the air passage component 231 through the lower end portion thereof and is provided coaxially with the communication cylinder 216 to communicate with the front part of the communication cylinder 216. Also, in the front end portion of the communication cylinder 216, there is formed a tapered diameter-reduced portion 238 so as to be inserted and fitted into the inner edge portion of the communication hole 182. A fixing bracket portion 239 to be aligned with one of the bosses 184 in the partition wall central portion 171 and fixed using a screw, etc., not shown in the drawings is further provided in a protruding manner from the upper part of the communication cylinder 216.

The mechanical portion 232 includes: an outer wall portion 241 provided in a protruding manner rightward from the air passage component 231 in Fig. 1 to have a semi-arc shape when viewed from the front; a guiding rib portion 242 provided in an arc shape along the lower inner edge portion of the outer wall portion 241; an upper rib portion 243 provided in an arc shape along the upper inner edge portion of the outer wall portion 241; and a lower rib portion 244 provided in an arc shape along the lower inner edge portion of the outer wall portion 241. Also, in the front part of the mechanical portion 232, an axis hole portion 245 communicating with the air passage component 231 is bored in the central part of the arc-shaped outer wall portion 241, and a drive axis 246 is inserted rotatably in the axis hole portion 245. A drive gear 247 as driven transmission means is provided integrally around the drive axis 246. Further, in the mechanical portion 232, a side introduction opening 248 communicating with the air passage component 231 is formed in an opening manner inside the outer wall portion 241, and an opening opening-closing valve 249 for opening and closing the side introduction opening 248 is provided at the side introduction opening 248.

A bracket portion 251 to be aligned with one of the bosses 184 in the partition wall central portion 171 and fixed using a screw, etc., not shown in the drawings is provided in a protruding manner outward from the outer wall portion 241.

The guiding rib portion 242 is adapted to guide the rotation of the drive gear 247.

The upper rib portion 243 protrudes more anteriorly than the guiding rib portion 242 and is adapted to limit the rotating position above the drive gear 247.

Similarly, the lower rib portion 244 protrudes more anteriorly than the guiding rib portion 242 and is adapted to limit the rotating position below the drive gear 247.

The drive axis 246 is connected with the second opening-closing valve 235 in the air passage component 231 and is adapted to integrally drive the second opening-closing valve 235 when rotated. Also, the front end portion of the drive axis 246 is inserted in the axial support hole portion and is connected to the base end portion of the axial support armportion 207 in front of the partition wall central portion 171 to rotate integrally with the axial support arm portion 207. Then, a cam portion not shown in the drawings is provided at a position where the drive axis 246 is connected with the second opening-closing valve 235. The cam portion is adapted to open and close the opening opening-closing valve 249 and thereby the side introduction opening 248 with the rotation of the drive axis 246.

Here, the opening opening-closing valve 249 is formed in a quadrangular plate shape having an area larger than that of the side introduction opening 248. Between the opening opening-closing valve 249 and the guiding rib portion 242, there is provided a spring 255 as opening-closing valve urging means for urging the opening opening-closing valve 249 toward the side introduction opening 248.

Then, the drive gear 247 includes a limiting plate portion 257 as a first gear body provided integrally with the drive axis 246, a gear main body portion 258 as a second gear body provided in the rear of the limiting plate portion 257, and a guiding portion 259 provided integrally with the gear main body portion 258.

The limiting plate portion 257 is formed in a fan shape having a center angle of about 90 degrees, in which a plurality of elongated limiting holes 261 are bored in the circumferential direction.

The gear main body portion 258 is formed in a fan shape having a size slightly smaller than that of the limiting plate portion 257 and is provided coaxially with the limiting plate portion 257 in an overlapped manner, in which a plurality of insertion ribs 263 to be inserted in the respective limiting holes 261 are provided in a protruding manner from the front surface thereof. Also, in the outer peripheral edge portion of the gear main body portion 258, there is provided an outer peripheral gear portion 264 as a meshing portion protruding more radially outward than the limiting plate portion 257. Further, on either end portion of the outer peripheral gear portion 264 in Figs. 1 and 2, there are provided notched portions 265 and 266 for preventing interference.

The guiding portion 259 is provided on the rear side surface in the vicinity of the outer peripheral edge portion of the gear main body portion 258, in which a groove portion 267 to be fitted with the guiding rib portion 242 and the upper rib portion 243 is provided in the circumferential direction. Then, a gear coil spring 268 as gear urging means is disposed inside the groove portion 267. The gear coil spring 268 is formed to have a width larger than that of the groove portion 267 and is held in the groove portion 267, being adapted to come into contact with the upper rib portion 243 fitted into the groove portion 267 or the lower rib portion 244 to contract, when the drive gear 247 is rotated upward or downward, to urge the gear main body portion 258 downward or upward in the rotational direction.

Then, the attachment 233 is a portion where to install a motor 271 as drive means, having an attachment plate portion 272 provided in a circular shape to be tangent to the outer peripheral portion of the outer wall portion 241 and an extensively provided plate portion 273 provided extensively rearward from a part in the outer peripheral edge portion of the attachment plate portion 272.

In the attachment plate portion 272, an elongated notched hole portion 275 is formed in a notched and slanted manner upward on the side opposite that of the air passage component 231. In the attachment plate portion 272, there are also bored a plurality of screw receiving holes 276 for receiving screws, etc., not shown in the drawings to fix the motor 271.

In the notched hole portion 275, a motor axis 281 as the rotation axis of the motor 271 is inserted and protrudes forward. The leading end portion of the motor axis 281 is inserted in the hole portion 194 and is connected to the rotating gear 195 in front of the partition wall central portion 171 to be rotated integrally with the rotating gear 195. Also, a rotating gear 284 as drive transmission means having an outer peripheral meshing gear portion 283 to be meshed with the outer peripheral gear portion 264 is provided integrally with the motor axis 281.

The motor 271 is provided rotatable in either direction based on a signal from the control means, for example.

The communication cylinder 216 protrudes rearward and the outer peripheral portion in the base end portion thereof is provided with a blower connection packing 287 as a sealing member to be connected air-tightly with the suction side of the electric blower 5.

Then, the above-described arrangements cause a main air passage W1 passing through at least the pleated filter 139 and an auxiliary air passage W2 not passing through the pleated filter 139 to be formed in the electric vacuum cleaner.

Specifically, the main air passage W1 provides communication between the main body suction port 11 and the suction side of the electric blower 5 through the dust separating unit 21 (guiding air duct 31, separating chamber section 32, communication duct 34, etc.), dust collecting section unit 22 (lateral air passage 154 and dust collecting chamber 152), connection openings 99 and 104, pleated filter 139, communication hole portions 188, communication hole 182, connection cylinder 237, and communication cylinder 216.

Also, the auxiliary air passage W2 provides communication between the outside-air intake opening 117 and the suction side of the electric blower 5 via the dust receiving section 115, lower outlet opening 131, communication air passage 62, separating chamber section 32, dust collecting section unit 22 (lateral air passage 154 and dust collecting chamber 152), protruding duct 98, partition wall air passage 172 (connection hole 219, communication protruding portion 213, fitting air passage 214, vertical air passage 215, etc.), connection cylinder 237, and communication cylinder 216.

Then, there is formed switch means C for switching between the main and auxiliary air passages W1 and W2 in accordance with the rotational direction of the motor 271 using, for example, the rotating body 27, first opening-closing valve 66, connection mechanism 70, connection hole opening-closing valve 222, second opening-closing valve 235, drive gear 247, and rotating gear 284. That is, the rotating body 27 forms also a part of the switch means C.

Next will be described the operation of the above-described embodiment.

First, the hose body 12, extension duct 16, and floor brush 17 are connected in series in a communicating manner to the main body suction port 11, and then the cover body 3 of the main body case 4 is opened to place the dust collecting unit 7 in the main body dust collecting chamber 8.

In the case above, the dust separating unit 21 is first placed in the main body dust collecting chamber 8 so that the suction connecting port 38 is connected air-tightly to the downstream side of the main body suction port 11 via the front packing 42 and the pleated filter body 26 in the filter section 25 is fitted in such a manner as to face the circular rotating portion 179 of the partition wall 9.

Further, when the dust collecting section unit 22 is placed in the main body dust collecting chamber 8 with the dust separating unit 21 placed therein, the nail portion is pressed into the locking hole 55 in the locking portion 48 of the locking body 40 on the dust separating unit 21 side, and the locking body 40 slides rearward against the urging by the locking body urging means. Then, when the locking body 40 slides forward through the urging by the locking body urging means, with the nail portion being fitted into the locking hole 55, to return to the original position, the nail portion is locked against the locking hole 55 and the dust collecting section unit 22 is locked against the dust separating unit 21.

At the same time, the air passage opening of the dust collecting section unit 22 is connected air-tightly to the introduction opening 65 in the upper part of the dust separating unit 21, while the sidewall opening of the dust collecting section unit 22 is connected air-tightly to the side opening 97 of the dust separating unit 21.

In the state above, when the power cord is taken out of the main body case 4 to be plugged into a wall socket, etc., and an operator holds the grip part 14 to operate a predetermined setup button 15, the control means drives the electric blower 5 and rotates the motor 271 in the counterclockwise direction in Fig. 1.

As a result, the rotating gear 195 connected to the front end portion of the motor axis 281 of the motor 271 is rotated in the counterclockwise direction in Fig. 4, and then the circular rotating portion 179, in which the outer peripheral gear portion 190 is meshed with the gear portion 201 of the rotating gear 195, is rotated in the clockwise direction in Fig. 4, so that the pleated filter body 26 is rotated integrally with the circular rotating portion 179.

In the case above, since the dust removing protrusion 147 is engaged with a valley portion of the pleated filter 139 of the pleated filter body 26, the rotating body 27 is also rotated integrally in the same direction as the pleated filter body 26 while being guided by the guiding part 118 to result in a state indicated by the solid line in Fig. 9 where the connection openings 99 and 104 are opened and the dust removing arm portion 143 comes free from the opening-closing cover 120 so that the opening-closing cover 120 is restored through an urging force by the opening-closing body urging means to choke the outside-air intake opening 117 and the rotating body 27 stops rotating through the action of the stopper portion 144 at a position indicated by the solid line in Fig. 9.

Further, when the meshing gear portion 81 of the rotating body 27 is rotated in the counterclockwise direction in Fig. 6 with the rotation of the rotating body 27, the connection plate 73 slides leftward in Fig. 6 due to meshing between the meshing gear portion 81 and the rack gear portion 82, the base end side of the crank body 72 that is supported axially and rotatably at the front end portion of the extensively provided arm portion 76 of the connection plate 73 is rotated leftward in Fig. 6, and the leading end side of the first opening-closing valve 66 with which the crank body 72 is connected is rotated rightward in Fig. 6, so that communication is provided between the suction connecting port 38 and the connection opening 39 of the separating chamber section 32 shown in Fig. 8.

Also, when the pleated filter body 26 is further rotated in the state above, the dust removing protrusion 147 is rotated with respect to the dust removing arm portion 143 in such a manner as to follow the rotational direction of the pleated filter body 26 as indicated by the imaginary line 147a in Fig. 9 to get over mountain portions of the rotating pleated filter 139 while in contact with the mountain portions. After getting over the mountain portions, the dust removing protrusion 147 is restored through an urging force by the urging means to be fitted into a valley portion of the pleated filter 139 again.

Repeating the operation above causes the pleated filter body 26 to spin out of the rotating body 27 and the dust removing protrusion 147 to get over mountain portions of the pleated filter 139 sequentially to apply a vibration to the pleated filter 139, whereby fine dust trapped in the pleated filter 139 is removed from the pleated filter 139 and collected in the dust receiving section 115.

Further, in the state where the rotating gear 284 provided integrally with the motor axis 281 of the motor 271 is rotated in the counterclockwise direction in Fig. 1 together with the motor axis 281, when the gear main body portion 258 that is urged upward in the rotational direction by the gear coil spring 268 is rotated upward to be a state indicated by the imaginary line 258a, the guiding portion 259 is rotated upward together with the gear main body portion 258 along the guiding rib portion 242 to be a state indicated by the imaginary line 259a, and each insertion rib 263 is rotated to be a state indicated by the imaginary line 263a within each limiting hole 261, the limiting plate portion 257 starts rotating upward integrally with the gear main body portion 258. Then, when the outer peripheral gear portion 264 is rotated to be a state indicated by the imaginary line 264a so as to be meshed with the outer peripheral meshing gear portion 283 of the rotating gear 284, the drive gear 247 is rotated in the clockwise direction in Fig. 1 to be a state indicated by the imaginary line 247a shown in Fig. 1. In this case, when the upper rib portion 243 is fitted into the groove portion 267 of the guiding portion 259 to contract the gear coil spring 268 so that the drive gear 247 is urged downward in the rotational direction and the notched portion 266 faces the position of the outer peripheral meshing gear portion 283, the meshing between the rotating gear 284 and the drive gear 247 is blocked off so that the rotating gear 284 spins out of the drive gear 247.

Thus, the leading end side of the second opening-closing valve 235 connected with the rear end side of the drive axis 24 6 that is provided integrally with the drive gear 247 is rotated upward in Fig. 1 (to be a state indicated by the solid line) to choke inside the air passage component 231 and the upper end portion of the opening opening-closing valve 249 is rotated rightward in Fig. 1 (to be a state indicated by the solid line) against the urging force by the spring 255, with the rotation of the cam portion that is provided integrally with the drive axis 246, to open the side introduction opening 248, and further the leading end side of the axial support arm portion 207 that is connected with the front end portion of the drive axis 246 is rotated rightward in Fig. 3 (to be a state indicated by the solid line) to rotate the valve body 206 rightward in Fig. 3 (to be a state indicated by the solid line), whereby the communication hole 182 is opened.

It is noted that the connection hole opening-closing valve 222 is rotated upward in Fig. 1, i.e., toward the connection hole 219 through a negative pressure by the electric blower 5 to choke the connection hole 219.

As a result, the main air passage W1 is connected in a communicating manner to the suction side of the electric blower 5, while the auxiliary air passage W2 is blocked off from the suction side of the electric blower 5.

In addition, until the second opening-closing valve 235 closes the air passage component 231, the opened side introduction opening 248 takes outside air into the air passage component 231 through the negative pressure by the electric blower 5 to blow the fine dust filter 102 from the downstream side via the fitting air passage 214, communication protruding portion 213, connection hole 219, and protruding duct 98 and thereby to backwash the fine dust filter 102 to suspend fine dust trapped in the fine dust filter 102 so as to be removed easily from the fine dust filter 102.

Then, the operator runs the floor brush 17 back and forth on the floor to suck dust on the floor with air through the leading end side of the floor brush 17 through the action of the negative pressure by the electric blower 5.

The sucked air becomes an intake air stream to be sucked into the suction connecting port 38 of the dust collecting unit 7 via the floor brush 17, extension duct 16, hose body 12, and main body suction port 11.

The air is then sucked into the separating chamber section 32 with dust through the connection opening 39 and circles between the separating chamber section 32 and the outer peripheral surface of the dust separating means 33, whereby coarse dust, which has a relatively large size, is centrifugally separated to be sucked into the dust collecting section unit 22 with air via the introduction opening 65 and the air passage opening.

Also, fine dust is trapped when the intake air stream passes through the net filters 86 and 95. The intake air stream flows into the communication air passage 35 via the openings 61 and 59 to pass through the first connection opening 99 toward the upstream side of the pleated filter body 26.

Then, the coarse dust passes through the lateral air passage 154 in the dust collecting section unit 22 to be housed in the dust collecting chamber 152 and is compressed in the dust collecting chamber 152 when the intake air stream flows from the sidewall opening to the side opening 97. The flowing intake air stream passes through the second connection opening 104 toward the upstream side of the pleated filter body 26.

The intake air stream then passes through the pleated filter 139 of the pleated filter body 26 and the pleated filter 139 traps contained fine dust.

The intake air stream passes through the communication hole portions 188 and communication hole 182 of the partition wall 9 and then the connection cylinder 237 and communication cylinder 216 to be sucked into the suction side of the electric blower 5.

Then, the intake air stream sucked into the electric blower 5 passes through the electric blower 5 to become an exhaust air stream and discharged into the atmosphere through an exhaust hole of the main body case 4 not shown in the drawings.

After cleaning, the operator operates a predetermined setup button 15 to output a turn-off signal for the electric blower 5 to the control means.

In the case above, the control means receiving the turn-off signal for the electric blower 5 first rotates the motor 271 in the clockwise direction in Fig. 1 so that the rotating gear 195 is rotated in the clockwise direction in Fig. 4, and then the circular rotating portion 17 9, in which the outer peripheral gear portion 190 is meshed with the gear portion 201 of the rotating gear 195, is rotated in the clockwise direction in Fig. 4, so that the pleated filter body 26 is rotated integrally with the circular rotating portion 179.

In the case above, since the dust removing protrusion 147 is engaged with a valley portion of the pleated filter 139 of the pleated filter body 26, the rotating body 27 is also rotated integrally in the same direction as the pleated filter body 26 while being guided by the guiding part 118 to result in a position indicated by the imaginary line 27a in Fig. 9 where the choke valve portion 142 is in a state indicated by the imaginary line 142a to operate the opening-closing member 132 to open the lower outlet opening 131 and the choke valve portion 142 chokes the connection openings 99 and 104. Further, the dust removing arm portion 143 of the rotating body 27 is moved to a position indicated by the imaginary line 143a in Fig. 9 to come into contact with the opening-closing body protrusion 124 of the opening-closing cover 120, whereby the opening-closing cover 120 is moved to a position indicated by the imaginary line 120a in Fig. 9 (imaginary line 120b in Fig. 6) so that the outside-air intake opening 117 is opened and the rotating body 27 stops rotating through the action of the stopper portion 145.

Further, when the meshing gear portion 81 of the rotating body 27 is rotated in the clockwise direction in Fig. 6 to be a state indicated by the imaginary line 81a with the rotation of the rotating body 27, the connection plate 73 slides rightward in Fig. 6 due to meshing between the meshing gear portion 81 and the rack gear portion 82 to be a state indicated by the imaginary line 73a, the base end side of the crank body 72 that is supported axially and rotatably at the front end portion of the extensively provided arm portion 76 of the connection plate 73 is rotated rightward in Fig. 6 to be a state indicated by the imaginary line 72a, and the leading end side of the first opening-closing valve 66 with which the crank body 72 is connected is rotated leftward in Fig. 6 to be a state indicated by the imaginary line 66a, so that the communication between the suction connecting port 38 and the connection opening 39 of the separating chamber section 32 shown in Fig. 8 is blocked off.

Also, when the pleated filter body 26 is further rotated in the state above, the dust removing protrusion 147 is rotated with respect to the dust removing arm portion 143 in such a manner as to follow the rotational direction of the pleated filter body 26 as indicated by the imaginary line 147b in Fig. 9 to get over mountain portions of the rotating pleated filter 139 while in contact with the mountain portions. After getting over the mountain portions, the dust removing protrusion 147 is restored through an urging force by the urging means to be fitted into a valley portion of the pleated filter 139 again.

Repeating the operation above causes the pleated filter body 26 to spin out of the rotating body 27 and the dust removing protrusion 147 to get over mountain portions of the pleated filter 139 sequentially to apply a vibration to the pleated filter 139, whereby fine dust trapped in the pleated filter 139 is removed from the pleated filter 139 and collected in the dust receiving section 115.

That is, the rotating body 27 is adapted to be separated from the transmission of a driving force from the motor 271 when rotated by a predetermined angle of 360 degrees or less, i.e., 90 degrees in the present embodiment.

Therefore, between the states indicated, respectively, by the solid line and the imaginary line 27a in Fig. 9, the rotating body 27 is adapted to operate as a part of the switch means C in a rotation by 90 degrees in the clockwise or counterclockwise direction and to stop rotating after the rotation by 90 degrees to operate as dust removing means for removing dust from the pleated filter 139.

Further, when the rotating gear 284 provided integrally with the motor axis 281 of the motor 271 is rotated in the clockwise direction in Fig. 1 together with the motor axis 281, the outer peripheral gear portion 264 of the drive gear 247 that is urged downward in the rotational direction by the gear coil spring 268 is meshed with the outer peripheral meshing gear portion 283 of the rotating gear 284 so that the drive gear 247 is rotated in the counterclockwise direction in Fig. 1 and the leading end side of the second opening-closing valve 235 connected with the rear end side of the drive axis 24 6 that is provided integrally with the drive gear 247 is rotated downward in Fig. 1 to be a state indicated by the imaginary line 235a to open the air passage component 231 and the upper end portion of the opening opening-closing valve 249 is rotated leftward in Fig. 1 to be a state indicated by the imaginary line 249a against the urging force by the spring 255, with the rotation of the cam portion that is provided integrally with the drive axis 246, to choke the side introduction opening 248, and further the leading end side of the axial support arm portion 207 that is connected with the front end portion of the drive axis 246 is rotated leftward in Fig. 3 to be a state indicated by the imaginary line 207a to rotate the valve body 206 leftward in Fig. 3 to be a state indicated by the imaginary line 206a, whereby the communication hole 182 is choked.

In the case above, when the drive gear 247 is rotated downward to be a state indicated by the solid line in Fig. 1 and then the lower rib portion 244 is fitted into the groove portion 267 of the guiding portion 259 to contract the gear coil spring 268 so that the drive gear 247 is urged upward in the rotational direction and the notched portion 265 faces the position of the outer peripheral meshing gear portion 283, the meshing between the rotating gear 284 and the drive gear 247 is blocked off so that the rotating gear 284 spins out of the drive gear 247.

In addition, the connection hole opening-closing valve 222 is rotated downward due to its own weight as indicated by the imaginary line 222a in Fig. 1 to open the connection hole 219.

As a result, the auxiliary air passage W2 is connected in a communicating manner to the suction side of the electric blower 5, while the main air passage W1 is blocked off from the suction side of the electric blower 5.

Then, when outside air is taken into the auxiliary air passage W2 through the outside-air intake opening 117 through a negative pressure by the electric blower 5, the sucked air is sucked into the separating chamber section 32 via the upstream side of the pleated filter 139, dust receiving section 115, lower outlet opening 131, and communication air passage 62 so that fine dust removed from the pleated filter 139 and collected in the dust receiving section 115 is carried to the separating chamber section 32.

The air is then sucked into the dust collecting chamber 152 in the dust collecting section unit 22 via the separating chamber section 32, introduction opening 65, and air passage opening to pass through the sidewall opening and the side opening 97. After fine dust is trapped when passing through the fine dust filter 102, the air passes through the protruding duct 98, connection hole 219, communication protruding portion 213, fitting air passage 214, and vertical air passage 215 sequentially to be sucked into the suction side of the electric blower 5 through the communication cylinder 216, and then passes through the electric blower 5 to become an exhaust air stream and discharged outside of the main body case 4.

Then, when a certain period of time has passed since the start of the motor 271 operation, the control means turns the motor 271 as well as the electric blower 5 off.

If dust of a predetermined amount or more is collected in the dust collecting section unit 22, the cover body 3 of the main body case 4 is opened to detach the dust collecting section unit 22 from the main body dust collecting chamber 8. In this case, when the operator presses the sliding protrusion 53 on the locking body 40 rearward, the locking body 40 slides rearward to be a state indicated by the imaginary line 40a in Fig. 7 against the urging force by the locking body urging means so that the nail portion is disengaged from the locking hole 55, whereby the dust collecting section unit 22 is made detachable upward from the dust separating unit 21.

Then, when the operator holds the handle part 156 over a trash can, etc., to operate the release button 165, the cover body 161 is rotated downward due to its own weight and the dust collecting chamber 152 is opened, so that the dust housed therein is discharged through the opening portion 158.

Also, when the various filters of the dust separating unit 21 are clogged, the dust separating unit 21 can also be detached from the main body dust collecting chamber 8 and cleaned appropriately.

Then, the dust separating unit 21 and dust collecting section unit 22 are reinstalled sequentially into the main body dust collecting chamber 8 in the order opposite that when detaching the units.

As described heretofore, in accordance with the above-described embodiment, the switch means C switches air passages to provide communication between the auxiliary air passage W2 and the suction side of the electric blower 5 with fine dust removed from the pleated filter 139 by the rotating body 27 being received by the dust receiving section 115, so that air is sucked from the outside-air intake opening 117 into the electric blower 5 through the dust receiving section 115 and the fine dust filter 102 in the dust collecting section unit 22, which allows the fine dust collected in the dust receiving section 115 to be trapped in the fine dust filter 102, resulting in improved cleanliness.

In addition, since the pleated filter body 26, rotating body 27 as dust removing means, and the entire switch means C, etc., are interlocked by the rotation of the single motor 271, the configuration can be simplified and the production cost can be reduced by commoditizing parts relative to the case of providing a plurality of motors.

Further, since when the pleated filter body 26 and the rotating body 27 are rotated integrally by 90 degrees, the rotating body 27 comes into contact with the stopper portions 144 and 145 to stop rotating and the dust removing protrusion 147 that is fitted in a valley portion of the pleated filter 139 is rotated in an escaping manner in the rotational direction of the pleated filter body 26 with respect to the dust removing arm portion 143 through contact with mountain portions of the pleated filter 139 so that the rotating body 27 is separated from the driving force of the motor 271, the control can be facilitated and the rotating body 27, etc., cannot be damaged due to an excessive rotation relative to the case of, for example, controlling the rotation angle of the motor while considering the rotation angle of the rotating body 27.

Then, since the rotating body 27 is adapted to operate as a part of the switch means C in a rotation by 90 degrees or less because the choke valve portion 142 opens and closes the connection openings 99 and 104 and to stop rotating after the rotation by 90 degrees to operate as dust removing means for removing dust from the pleated filter 139, the configuration can be made simpler relative to the case of providing such components separately.

It is noted that in the above-described embodiment, the arrangement of the main air passage W1 is not restricted to that described above as long as it provides communication between the main body suction port 11 and the suction side of the electric blower 5 through at least the pleated filter 139.

Also, the arrangement of the auxiliary air passage W2 is not restricted to that described above as long as it provides communication between the outside-air intake opening 117 and the suction side of the electric blower 5 not through the pleated filter 139 but via the dust receiving section 115 and the dust collecting section unit 22.

Further, the position of providing the outside-air intake opening 117 is not restricted as long as it provides communication between outside air and the dust receiving section 115.

Therefore, the arrangement of the switch means C is not restricted to that described above as long as it corresponds to the arrangements of the main air passage W1 and auxiliary air passage W2 so as to switch between the main air passage W1 and the auxiliary air passage W2 in response to the switching of the rotational, direction of the motor 271.

Furthermore, the rotating body 27 may stop rotating at any angle of 360 degrees or less.

Then, the timing of driving the motor 271 may be set to correspond to any condition such as appropriately providing a button for driving the motor 271 and operating the button instead of setting on/off of the electric blower 5.

In addition, the details of the electric vacuum cleaner are not restricted to the above-described arrangements.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An electric vacuum cleaner comprising:
a vacuum cleaner main body housing an electric blower and including a main body suction port communicable with the suction side of the electric blower;
a dust collecting section for trapping dust that is sucked therein by driving the electric blower;
a filter for trapping fine dust;
drive means for rotating the filter under a predetermined condition;
dust removing means adapted to come into contact with the filter being rotated by the drive means to remove dust that is trapped in the filter;
a dust receiving section for receiving dust removed from the filter by the dust removing means;
an outside-air intake opening capable of providing communication between the dust receiving section and outside air;
a main air passage for providing communication between the main body suction port and the suction side of the electric blower through at least the filter;
an auxiliary air passage for providing communication between the outside-air intake opening and the suction side of the electric blower through the dust receiving section and the dust collecting section and not through the filter; and
switch means adapted to be driven by the drive means to provide communication selectively between the main air passage or the auxiliary air passage and the suction side of the electric blower in accordance with the rotational direction of the drive means.

2. The electric vacuum cleaner according to claim 1, wherein the dust removing means and the switch means are adapted to be separated from the transmission of a driving force from the drive means when rotated by a predetermined angle of 360 degrees or less.

3. The electric vacuum cleaner according to claim 1 or 2, wherein
the dust removing means is adapted to operate as a part of the switch means in a rotation by a predetermined angle of 360 degrees or less and to stop rotating after the rotation by the predetermined angle to remove dust from the filter.
